# EUROPÄISCHE PATENTSCHRIFT

(11) **EP 2 235 519 B1**
(45) Veröffentlichungstag und Bekanntmachung des Hinweises auf die Patenterteilung: **27.03.2013**
(21) Anmeldenummer: 09704400.2
(22) Anmeldetag: 07.01.2009
(51) Int. Cl.: G01N 30/20, G01N 35/10

(54) **PROBENGEBER FÜR DIE FLÜSSIGKEITSCHROMATOGRAPHIE, INSBESONDERE FÜR DIE HOCHLEISTUNGSFLÜSSIGKEITSCHROMATOGRAPHIE**
SAMPLE DISPENSER FOR LIQUID CHROMATOGRAPHY, PARTICULARLY FOR HIGH-PERFORMANCE LIQUID CHROMATOGRAPHY
DISPOSITIF DE DISTRIBUTION D'ÉCHANTILLON POUR CHROMATOGRAPHIE EN PHASE LIQUIDE, EN PARTICULIER POUR CHROMATOGRAPHIE EN PHASE LIQUIDE À HAUTE PERFORMANCE

(30) Priorität: 25.01.2008 DE 102008006266
(43) Veröffentlichungstag der Anmeldung: 06.10.2010
(73) Patentinhaber: Dionex Softron GmbH, 82110 Germering (DE)
(72) Erfinder: HOCHGRAEBER, Hermann, 94560 Offenberg-Neuhausen (DE)
(74) Vertreter: Eder, Thomas
(86) Internationale Anmeldenummer: PCT/DE2009/000004
(87) Internationale Veröffentlichungsnummer: WO 2009/092345

(56) Entgegenhaltungen:
- WO-A-02/39105
- WO-A-2008/005845
- WO-A2-2007/109529
- DE-A1- 3 223 852
- DE-A1- 19 628 206
- US-A- 5 637 208
- FUJINARI E M: "NEW ALTERNATIVE TO NORMAL PHASE HPLC AUTOMATION USING METHYLENE CHLORIDE MOBILE PHASES: A SYNCHRONIZED DUAL SWITCHING VALVE LOOP INJECTION SYSTEM" JOURNAL OF HIGH RESOLUTION CHROMATOGRAPHY AND CHROMATOGRAPHYCOMMUNICATIONS, DR.ALFRED HUETHIG VERLAG. HEIDELBERG, DE, Bd. 11, Nr. 8, 1. August 1988 (1988-08-01), Seiten 595-598, XP000005807 ISSN: 0344-7138

## Beschreibung

Die Erfindung betrifft einen Probengeber für die Flüssigkeitschromatographie, insbesondere für die Hochleistungsflüssigkeitschromatographie (HPLC) mit den Merkmalen des Oberbegriffs des Patentanspruchs 1.

In der HPLC muss eine zu untersuchende Probe in einen Hochdruck-Flüssigkeitsstrom eingespeist werden, wobei dieser nur so kurz wie möglich unterbrochen werden darf. Für diesen Zweck werden Hochdruck-Injektionsventile verwendet, die eine nahezu unterbrechungsfreie Umschaltung des Flüssigkeitsstroms ermöglichen. Ein solcher Aufbau ist beispielsweise in der US-Patentschrift 3,530,721 beschrieben. Die ursprüngliche Anmeldung dazu stammt bereits aus dem Jahre 1965.

Aus der US-Patentschrift 4,939,943 ist ein Probengeber mit einer "high pressure syringe unit" bekannt. Das Grundprinzip des dort gezeigten Probengebers nach dem Split Loop Prinzip hat sich in der HPLC bewährt.

Weiterhin ist in der US-Patenschrift WO 2006/083776 ein Probengeber beschrieben, der Druckstöße beim Schalten des Hochdruckventils vermeidet, die sich negativ auf die Effizienz und die Lebensdauer der Chromatographiesäule auswirken.

Aus der Veröffentlichung Fujinari E M:"New alternative to normal phase HPC automation using methylene chloride mobile phases: A synchronized dual switching valve loop injection system", Journal of high resolution chromatography and chromatography communications, Dr. Alfred Huethig Verlag, Heidelberg, DE, Bd. 11, Nr. 8, 1. August 1988, Seiten 595-598, ISSN: 0344-7138 ist eine Chromatographievorrichtung zur Automatisierung der Analyse von Proben bekannt, bei welcher ein bekannter Probengeber derart modifiziert ist, dass anstelle eines einzigen 6-Port-Ventils eine Kombination von zwei 6-Port-Ventilen verwendet wird, wobei die beiden 6-Port-Ventile in spezieller synchronisierter Weise angesteuert werden. Dabei soll auch die Reproduzierbarkeit der Analyseergebnisse verbessert werden. Nachteilig bei dieser Vorrichtung ist jedoch der Aufwand für zwei 6-Port-Ventile und der speziellen Ansteuerung anstelle eines einzigen 6-Port-Ventils. Die Problematik der Vermeidung von Schäden an einem Ventil durch Umschaltvorgänge bei den zu schaltenden hohen Drücken ist in dieser Veröffentlichung nicht angesprochen.

Die US 5,637,208 beschreibt ein Pumpensystem für Chromatographieanwendungen bestehend aus zwei oder mehreren gleichartigen Kolbenpumpen, die mittels speziell angesteuerter Ventile einen im Wesentlichen konstanten Fluss liefern. Ein Probengeber ist in dieser Schrift nicht offenbart.

Aus der WO 2007/109529 A2 ist eine Probengebereinheit bekannt, bei welcher mittels eines 6-Port-Ventils und eines weiteren 3/2-Wegeventils eine langsame Kompression eines in einer Probenschleife enthaltenen Probenvolumens ermöglicht wird. Dazu wird das Probenvolumen mit einer Unterdruckquelle in einer ersten Schaltstellung der beiden Ventile in die Probenschleife angesaugt. Dann wird mittels des 3/2-Wegeventils eine Druckquelle auf die Probenschleife bzw. das Probenvolumen aufgeschaltet und so das Probenvolumen vorzugsweise bis auf den Systemdruck komprimiert. Anschließend wird das 6-Port-Ventil so umgeschaltet, dass das Probenvolumen in den Pfad zur Säule eingespeist wird. Ziel dieser Vorgehensweise ist es, Störungen in der Position bzw. Zusammensetzung des Probenvolumens durch plötzliche Drucksteigerungen zu vermeiden. Allerdings benötigt dieses System ein zusätzliches 3/2-Wegeventil und eine zusätzliche Druckquelle. Die Problematik der Vermeidung von Schäden an einem Ventil durch Umschaltvorgänge bei den zu schaltenden hohen Drücken ist auch in diesem Stand der Technik nicht angesprochen.

Beim Schalten des Injektionsventils fließen Kompressions- und Dekompressionsvolumnia mit hoher Geschwindigkeit durch das Ventil. Entsprechend der nicht vorveröffentlichten deutschen Patentanmeldung DE 10 2007 059 651 A1 der Anmelderin vom 14. Dezember 2007 betreffend einen Probengeber für die Hochleistungsflüssigkeitschromatographie, der ein Hochdruck-Schaltventil mit optimierter Lebensdauer aufweist, erzeugen diese Strömungen Schäden an den Hochdruckventilkomponenten.

Die Lebensdauer des Hochdruck-Schaltventils bestimmt die Betriebskosten einer HPLC Anlage. Diese Kosten sollen durch Minimierung des Verschleißes der Hochdruck-Schaltventilkomponenten möglichst gering gehalten werden.

Der Erfindung liegt daher die Aufgabe zugrunde einen Probengeber für die Flüssigkeitschromatographie, insbesondere die Hochleistungsflüssigkeitschromatographie anzugeben, bei dem das Injektionsventil auch bei extrem hohen Drücken eine verbesserte Lebensdauer aufweist.

Die Erfindung löst diese Aufgabe mit den Merkmalen des Patentanspruchs 1.

Die Erfindung geht von der Erkenntnis aus, dass insbesondere durch den Einsatz des Split-Loop-Prinzips für einen Probengeber in der Probenschleife das Herstellen eines Druckausgleichs beim Wechsel von Schaltstellungen des Injektionsventils ermöglicht wird, wenn das Injektionsventil hierfür eine DRUCKAUSGLEICH-Schaltstellung aufweist, in welcher die Probenschleifen-Ports des Injektionsventils, die mit den Enden der Probenschleife verbunden sind, im Injektionsventil nicht mit anderen Ports verbunden sind.

Beim Split-Loop-Prinzip wird die Probenschleife im Verbindungsstück zwischen der Probenfördereinrichtung, die beispielsweise als Spritze ausgebildet sein kann, und dem betreffenden Probehschieifen-Port des Injektionsventils aufgeteilt. Das Ende des mit der Probenfördereinrichtung verbundenen Ansaugstücks des aufgeteilten Verbindungsstücks der Probenschleife wird zum Ansaugen des benötigten Probenvolumens oder zum Ansaugen eines Spülmediums zu einem Probenbehälter oder einem Behälter für das Spülmedium bewegt. Anschließend wird das aufgeteilte Verbindungsstück der Probenschleife wieder verbunden, so dass das angesaugte Probenvolumens in der INJECT-Position des Injektionsventils mittels der Pumpe in die Chromatographiesäule injiziert werden kann. Dieses grundsätzliche Prinzip ist bereits in der US 4,939,943 beschrieben. Dabei bietet dieses spezielle Split-Loop-Prinzip den Vorteil, dass die Probenfördereinrichtung nach erfolgter Injektion der Probe mit Laufmittel durchspült wird, so dass im Normalfall ein Spülen der Probenfördereinrichtung, der Probenschleife und des Injektionsventils nach erfolgter Injektion einer Probe nicht erforderlich ist.

Erfindungsgemäß wird das Injektionsventil nach dem Ansaugen des Probenvolumens in der LOAD-Position in die DRUCKAUSGLEICH-Position geschaltet, in welcher die Probenschleifen-Ports druckdicht gesperrt sind. In dieser Schaltstellung wird der Antrieb der Probenfördereinrichtung so angesteuert, dass sich in der geschlossenen Probenschleife und im Pumpenvolumen der Probenfördereinrichtung ein Druck aufbaut, der im Wesentlichen mit dem Druck übereinstimmt, mit welchem die Pumpe in der LOAD-Position oder in der INJECT-Position das Fluid der Chromatographiesäule zuführt. Selbst wenn der Druck in der Probenschleife vor dem Umschalten des Injektionsventils von der DRUCKAUSGLEICH-Position in die INJECT-Position nicht mit dem Druck der Pumpe identisch ist, sondern noch eine geringe Druckdifferenz bestehen bleibt, wird diese geringe Druckdifferenz erfindungsgemäß so gering gehalten, dass sich die Druckdifferenz weder in unzulässiger Weise nachteilig auf den Fluss durch die Chromatographiesäule auswirken kann oder gar zu einer Beschädigung des Injektionsventils oder der Chromatographiesäule führen kann.

Gleiches gilt analog für das Umschalten von der INJECT-Position in die LOAD-Position. Auch hierbei wird zunächst von der INCJECT-Position in die DRUCKAUSGLEICH-Position geschaltet, in welcher eine Reduzierung des Drucks, der im Wesentlichen dem Pumpendruck entspricht, so weit erfolgt, bis im Wesentlichen der Umgebungsdruck erreicht ist. Auch hier kann gegebenenfalls eine geringe, nicht störende Druckdifferenz bestehen bleiben, wenn von der DRUCKAUSGLEICH-Position in die LOAD-Position geschaltet wird.

Der Druckausgleich (Druckerhöhung oder Druckreduzierung) in der Probenschleife wird erfindungsgemäß durch eine entsprechende Ansteuerung des Antriebs der Probenfördereinrichtung erreicht.

Im Unterschied zu Probengebem nach dem Stand der Technik strömen damit die beim Druckausgleich entstehenden Fluidströmungen nicht mehr durch das Schaltventil, so dass keine Schädigung von Ventilkomponenten durch zu hohe Strömungsgeschwindigkeiten mehr auftreten kann.

Selbstverständlich wird dieses Ziel zumindest teilweise erreicht, wenn der Druckausgleich nur in einer der beiden vorstehend erläuterten Schaltrichtungen vorgenommen wird.

Nach der bevorzugten Ausführungsform der Erfindung sind in der DRUCKAUSGLEICH-Position des Injektionsventils die beiden Hochdruckports verbunden. Hierdurch wird der Fluss des Fluids durch die Chromatographiesäule aufrechterhalten und bei den Schaltvorgängen können keine unerwünschten Spitzen im Druckverlauf auftreten.

Nach einer Ausführungsform der Erfindung weist das Injektionsventil einen Rotor und einen Stator auf, wobei der Rotor eine mit der Stimfläche des Stators zusammenwirkende Stimfläche aufweist, in welcher zumindest drei Nuten ausgebildet sind, die abhängig von der Drehposition des Rotors gegenüber dem Stator in der Stirnfläche des Stators vorgesehene Port-Öffnungsquerschnitte der Hochdruckports, der Probenschleifen-Ports und des Wasteports entweder druckdicht verbinden oder druckdicht sperren. Die Nut, welche in der LOAD-Position des Injektionsventils die beiden Hochdruckports verbindet, ist so lang ausgebildet ist, dass sie die Hochdruckports auch nach einem Verdrehen von Stator und Rotor in die DRUCKAUSGLEICH-Position noch verbindet. Diese Nut ist gegenüber der entsprechenden Nut bei bekannten Injektionsventilen entsprechend verlängert.

Nach der bevorzugten Einsatzmöglichkeit für die Erfindung, nämlich in der HPLC ist die Probenfördereinrichtung hochdruckfest ausgebildet und kann Drücke erzeugen, welche in der HPLC Verwendung finden, vorzugsweise Drücke größer als 500 bis 600 bar, höchst vorzugsweise Drücke von größer als 1000 bar

Die Pröbehfördereinrichtung kann ein bewegbares Element aufweisen, welches abgedichtet in einem Pumpenvolumen geführt ist und welches mittels eines von der Steuereinheit ansteuerbaren Antriebs der Probenfördereinrichtung zur Förderung des im Pumpenvolumen enthaltenen Fluids bewegbar ist. Insbesondere kann die Probenfördereinrichtung als mittels eines Antriebs angetriebene Spritze ausgebildet sein, wobei das bewegbare Element durch den Kolben der Spritze gebildet ist.

Die Steuereinheit kann den Kolben bzw. das bewegbare Element nach Erreichen der DRUCKAUSGLEICH-Position des Injektionsventils durch eine entsprechende Ansteuerung des Antriebs um einen vorbestimmten Weg bewegen, der ausreicht, um eine durch Elastizitäten der Einrichtungen, die das Fluid führen, und durch die Kompressibilität des Fluids selbst notwendige Änderung des Pumpenvolumens der Probenfördereinrichtung zu erzeugen, wobei durch eine Vergrößerung des Pumpenvolumens eine Druckreduzierung in der Probenschleife im Wesentlichen auf Umgebungsdruck und durch eine Verringerung des Pumpenvolumens eine Druckerhöhung in der Probenschleife im Wesentlichen auf den Arbeitsdruck der Pumpe erreichbar ist. Die Bewegung des bewegbaren Elements kann gesteuert oder geregelt erfolgen.

Um eine Regelung des Drucks bzw. Enddrucks während des Druckausgleichs in der Probenschleife zu ermöglichen, kann ein Drucksensor vorgesehen sein, welcher den Druck des Fluids in der geschlossenen Probenschleife oder im Pumpenvolumen der Probenfördereinrichtung erfasst, zumindest während der Zeit, in welcher sich das Injektionsventil in der DRUCKAUSGLEICH-Position befindet.

In dieser Variante wird das Signal des Drucksensors vorzugsweise der Steuereinheit zugeführt, wobei die Steuereinheit den Druck des Fluids mit einem Solldruckwert vergleicht und die Probenfördereinrichtung so ansteuert, dass der Druck des Fluids vor dem Umschalten des Injektionsventils von der DRUCKAUSGLEICH-Position in die INJECT-Position einen Hochdruck-Sollwert erreicht und/oder dass der Druck des Fluids vor dem Umschalten des. Injektionsventils von der DRUCKAUSGLEICH-Position in die LOAD-Position einen Niederdruck-Sollwert erreicht.

Weitere Ausführungsformen der Erfindung ergeben sich aus den Unteransprüchen.

Die Erfindung wird nachstehend anhand eines in der Zeichnung dargestellten Ausführungsbeispiels näher erläutert. In der Zeichnung zeigen:
- Fig. 1: eine schematische Darstellung eines HPLC-Systems mit einem Probengeber nach der Erfindung, an welchen eine Chromatographiesäule angeschlossen ist, wobei sich das Injektionsventil in der LOAD-Position befindet und im dargestellten Zustand der Ansaugvorgang für ein Probenvolumen beginnen kann;
- Fig. 2: das HPLC-System in Fig. 1, wobei der Kolben der Spritze zum Ansaugen des Probenvolumens in die Endposition (Position C) bewegt wurde;
- Fig. 3: das HPLC-System in Fig. 2, wobei die Probennadel in den Injektionsport bewegt wurde;
- Fig. 4: das HPLC-System in Fig. 3, wobei das Injektionsventil von der LOAD-Position in die DRUCKAUSGLEICH-Position geschaltet wurde;
- Fig. 5: das HPLC-System in Fig. 4, wobei zum Druckausgleich (Druckerhöhung) in der Probenschleife der Kolben in die Position B bewegt wurde;
- Fig. 6: das HPLC-System in Fig. 5, wobei das Injektionsventil von der DRUCKAUSGLEICH-Position in die INJECT-Position geschaltet wurde;
- Fig. 7: das HPLC-System in Fig. 6, wobei nach dem Injizieren des angesaugten Probenvolumens das Injektionsventil von der INJECT-Position in die DRUCKAUSGLEICH-Position geschaltet wurde;
- Fig. 8: das HPLC-System in Fig. 7, wobei zum Druckausgleich (Druckreduzierung) der Kolben in die Endposition (Position C) bewegt wurde; und
- Fig. 9: das HPLC-System in Fig. 8, wobei das Injektionsventil von der DRUCKAUSGLEICH-Position in die LOAD-Position geschaltet wurde.

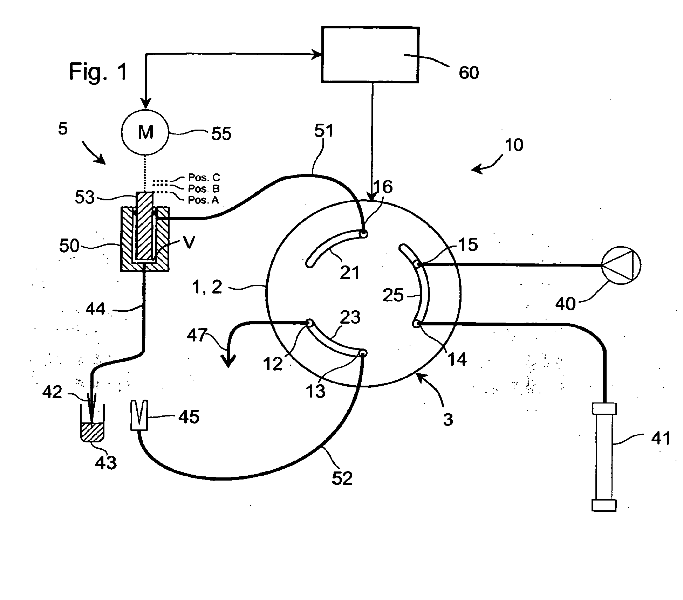

Fig. 1 zeigt in schematischer Darstellung ein HPLC-System mit einem nach dem Split-Loop-Prinzip arbeitenden Probengeber 10, der eine Probenfördereinrichtung 5, ein Injektionsventil 3 und eine Hochdruckpumpe 40 aufweist. Darüberhinaus weist der Probengeber 10 eine Probenschleife auf, die aus einem ersten Verbindungsstück 51 und einem zweiten Verbindungsstück 52,44 besteht. Hierbei kann es sich um druckfeste Leitung mit einem geringen Durchmesser, beispielsweise in Form von Glas - oder Edelstahlkapillaren, handeln. Das Verbindungsstück 51 ist mit einem ersten Probenschleifenport 16 des Injektionsventils 3 verbunden und mit der Probenfördereinrichtung bzw. deren Pumpenvolumen V. Das aus einem Ansaugstück 44 und einem Zuführstück 52 bestehende zweite Verbindungsstück ist auftrennbar ausgebildet. Hierzu mündet das Zuführstück 52 in einen Injektionsport 45, welcher über das Zuführstück 52 mit einem zweiten Probenschleifenport 13 des Injektionsventils 3 verbunden ist. Das mit einem Ende mit dem Pumpenvolumen V der Probenfördereinrichtung 5 verbundene Ansaugstück 44 weist am anderen Ende eine Probennadel 42 auf, mit welcher das Ansaugstück 44 mit dem Injektionsport 45 verbunden werden kann.

Die Probennadel 42 kann jedoch auch zu einem Probenbehälter 43 bewegt werden und aus diesem in der nachstehend erläuterten Weise ein definiertes Probenvolumen in das Ansaugstück 44 ansaugen. Des Weiteren kann die Probennadel 41 auch zu einem Behälter für ein Spülfluid (nicht dargestellt) bewegt werden, um aus diesem Spülflüssigkeit für einen Spülvorgang zu entnehmen, mit welcher die Probenschleife 51, 52, 44, das Pumpenvolumen V und gegebenenfalls auch die Ports und Nuten bzw. Kanäle des Injektionsventils gereinigt werden kann. Durch die spezielle Topologie des dargestellten Split-Loop-Prinzips ist jedoch normalerweise ein Spülen der Probenschleife 51, 52, 44 sowie der Probenfördereinrichtung 5 nicht erforderlich, da diese ohnehin bei einem Injektionsvorgang mit Laufmittel, welches von der Pumpe 40 zugefördert wird, durchspült wird. Es kann jedoch die Außenseite der Probennadel 42 durch das Eintauchen in einen Behälter mit Reinigungs- oder Spülflüssigkeit gereinigt werden.

Die Probenfördereinrichtung 5 umfasst in der dargestellten Ausführungsform eine Spritze 50 auf, in welcher ein Kolben 53 druckdicht und verschiebbar geführt ist. Der Kolben 53 wird mittels eines Antriebs 55, beispielsweise einem Schrittmotor, angetrieben. Der Antrieb 55 wird von einer Steuereinheit 60 angesteuert. Die Steuereinheit 60 steuert auch die Schaltvorgänge des Injektionsventils 3, welches einen nicht dargestellten, ansteuerbaren Antrieb aufweist.

Ein Waste-Port 12 des Injektionsventils ist mit einer Waste-Leitung 47 verbunden, aus welcher Fluid in ein nicht dargestelltes Waste-Reservoir abführbar ist.

Die Hochdruckpumpe 40 ist mit einem Hochdruckport 15 des Injektionsventils verbunden. Eine Chromatographiesäule 41 ist mit dem weiteren Hochdruckport 14 verbindbar. Die Hochdruckpumpe 40 kann als Bestandteil in den Probengeber integriert sein, kann jedoch auch in einer anderen Einheit oder einer separaten Pumpeneinheit vorgesehen sein.

Das Injektionsventil 3 besteht aus einem Stator 1 und einem Rotor 2. Der Stator 1 weist die beiden Hochdruckports 14, 15, die beiden Probenschleifen-Ports 13, 16 und den Waste-Port 12 auf. Über diese Ports ist das Injektionsventil 3 über die vorstehend beschriebenen Verbindungsleitungen, die als Kapillarverbindungen ausgebildet sein können, mit den anderen Funktionselementen des HPLC-Systems verbunden. Die dafür benötigten Hochdruckverschraubungen sind der Übersichtlichkeit halber in Fig. 1 nicht dargestellt. Aus Gründen der Einfachheit ist das Injektionsventil in der Grenzfläche zwischen Stator 1 und Rotor 2 dargestellt, wobei sowohl die Ausgestaltung der Stimfläche des Stators 1 als auch die Ausgestaltung der Stirnfläche des Rotors 2 gezeigt ist, um das Verständnis der Funktionsweise zu erleichtern, Innerhalb des Injektionsventils 3 sind die Ports als Bohrungen ausgebildet, die zur anderen Seite des Stators 1 führen. Der Rotor 2 weist eine Anzahl bogenförmiger Nuten 21, 23, 25 auf, die genau auf die Bohrungen der Ein- und Ausgangsports ausgerichtet sind.

Der Rotor 2 wird mit einer Andruckkraft gegen den Stator gepresst, so dass sich eine gemeinsame Grenzfläche zwischen Rotor 1 und Stator 2 ausbildet, an der die beiden Teile gegeneinander dichten. Die Andruckkraft wird dabei so bemessen, dass die Anordnung auch bei den höchsten zu erwartenden Drücken noch dicht ist.

In der in Fig. 1 gezeigten ersten LOAD-Position des Ventils 3 sind die Nuten 21, 23, 25 zu den Ports 12 bis 16 so ausgerichtet, dass die Nuten 23 und 25 die beiden Hochdruckports 14, 15 bzw. den Waste-Port 12 und den Probenschleifen-Port 13 verbinden. In dieser LOAD-Position fördert die Hochdruckpumpe 40 somit Fluid in Richtung auf die Chromatographiesäule 41. Des Weiteren ist der Probenschleifen-Port 16 druckdicht verschlossen.

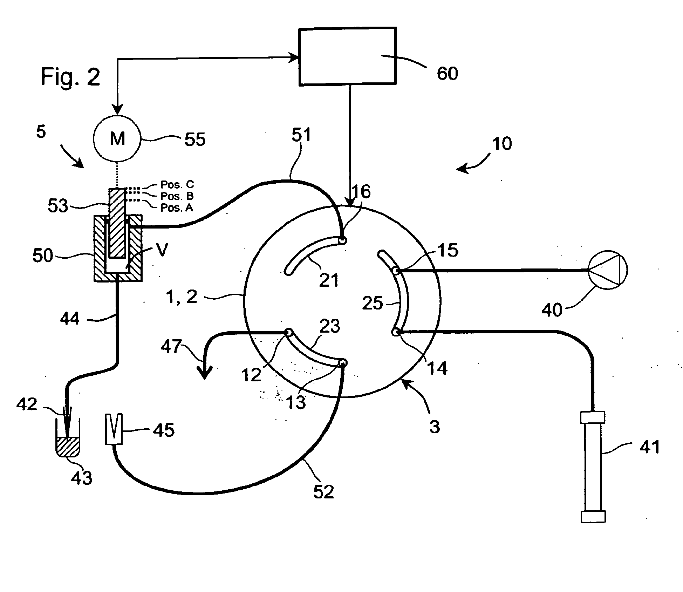

In dem in Fig. 1 dargestellten Zustand ist die Probennadel 42 in den Probenbehälter 43 bewegt, so dass ein Probenvolumen angesaugt werden kann. Hierzu befindet sich der Kolben 53 in Position A und kann von der Steuereinheit 60 für das Ansaugen in Position C gesteuert werden. Hierbei wird das gewünschte, definierte Probenvolumen in das Ansaugstück 44 angesaugt, wobei das Volumen der Probe kleiner ist als das Volumen des Ansaugstücks 44 damit im Pumpenvolumen keine Vermischung des Probenfluids mit dem von der Hochdruckpumpe zugeförderten Fluid erfolgen kann. Fig. 2 zeigt den Zustand des HPLC-Systems nach dem Beenden des Ansaugvorgangs.

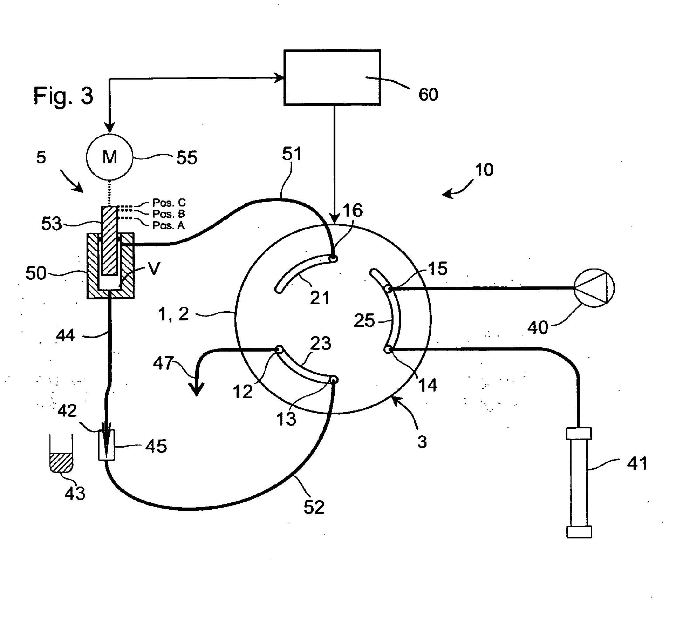

Um das Probenvolumen, das sich im Ansaugstück 44 befindet, injizieren zu können wird die Probennadel 42 in den Injektionsport 45 bewegt. Dieser dichtet die Nadelspitze hochdruckfest ab. Dieser Zustand ist in Fig. 3 dargestellt.

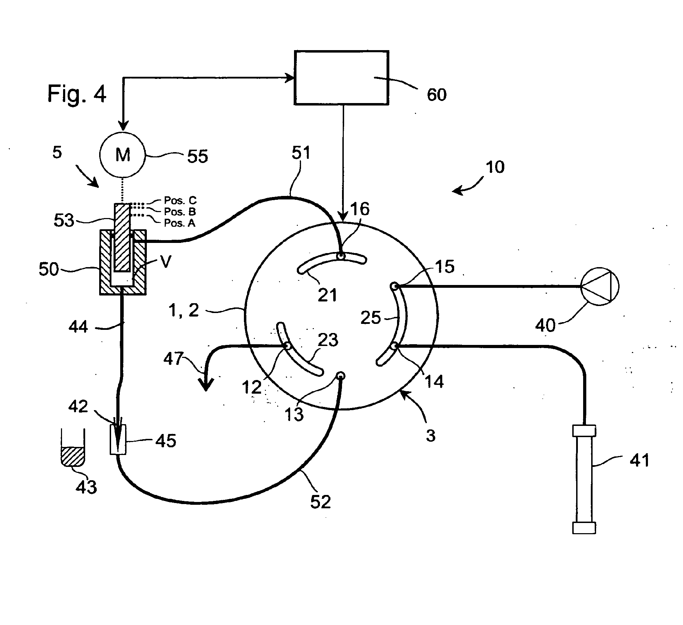

Im nächsten Schritt wird der Druck in der Probenschleife an den Arbeitsdruck der Chromatographiesäule 41 angeglichen, d.h. an den Druck, mit dem die Hochdruckpumpe 40 Fluid dem Eingang der Chromatographiesäule 41 zuführt. Hierfür wird zunächst das Injektionsventil in eine DRUCKAUSGLEICH-Position geschaltet, in der das Verbindungsstück 51 und das zweite Verbindungsstück bzw. das Zuführstück 52 der Probenschleife keine Verbindung zu den anderen an das Injektionsventil 3 angeschlossenen Komponenten haben (Fig.4).

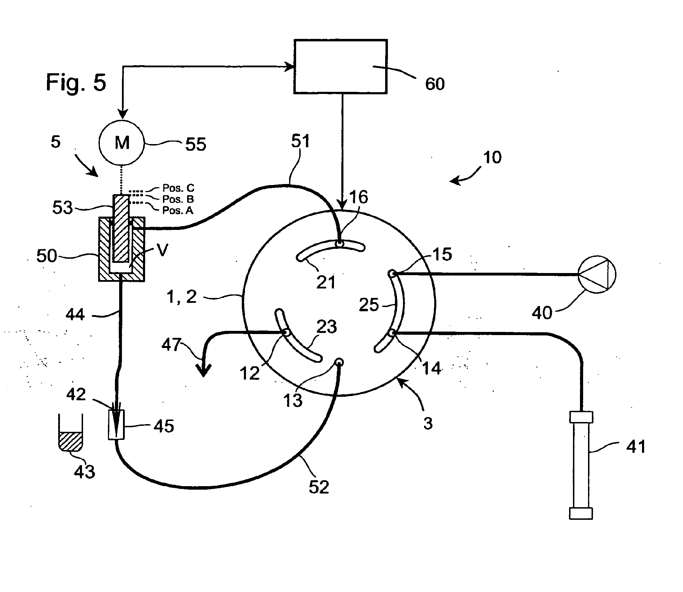

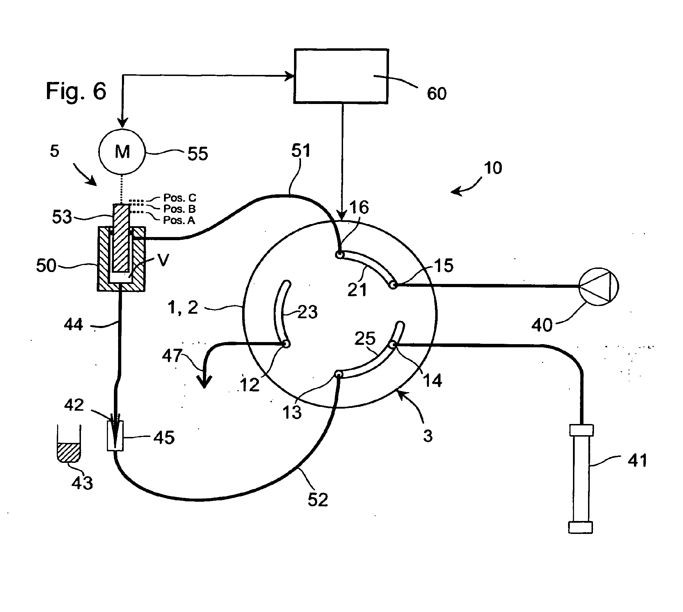

In dieser DRUCKAUSGLEICH-Position wird der Kolben 53 der hochdruckfesten Probenfördereinrichtung in Position B bewegt (Fig.5). Um während der Förderung des für die Kompression des Probenschleifeninhalts notwendigen Volumens die Strömung durch die Chromatographiesäule 41 nicht zu unterbrechen ist die Nut 25 im Rotor 2 des Ventils entsprechend verlängert ausgeführt, so dass auch in der DRUCKAUSGLEICH-Position noch die beiden Hochdruckports 14, 15 verbunden sind. Der für den Druckaufbau notwendige Förderweg des Kolbens 53 von Position C nach Position B kann aus der Kompressibilität des in der Probenfördereinrichtung 5 und Probenschleife eingeschlossenen Fluidvolumens, der Elastizität der Anordnung und dem aktuellen Pumpendruck berechnet werden. Alternativ kann der Druckausgleich mit Hilfe eines Regelkreises für den Druck in der hochdruckfesten Probenfördereinrichtung erreicht werden. Hierfür muss der Druck an geeigneter Stelle gemessen werden und die Position des Kolbens 53 in der Probenfördereinrichtung 5 durch den Antrieb 55 so eingestellt werden, dass der Druck dem notwendigen Zieldruck (=Säulendruck) entspricht. Für die Druckmessung kann ein Drucksensor oder indirekt eine Kraftmessung herangezogen werden. Eine Kraftmessung am Kolben 53 oder im Antrieb 55 sind denkbare Lösungen. Nach Erreichen der Druckgleichheit wird das Ventil in die INJECT-Position geschaltet; und dadurch das angesaugte Probenvolumen in die Säule 41 injiziert (Fig 6).

Im dargestellten Ausführungsbeispiel erfasst die Steuereinheit 60 die Kraft, die der Antrieb 55 aufbringen muss, um eine entsprechende Kompression in der Probenschleife zu erreichen. Der Antrieb 55 kann hierzu einen integrierten Sensor (nicht dargestellt) aufweisen, dessen Signal der Steuereinheit 60 zugeführt ist (angedeutet durch den Doppelpfeil zwischen Antrieb 55 und Steuereinheit 60). Hierdurch kann die Steuereinheit den Ist-Druck im Pumpenvolumen und damit in der Probenschleife (der Druckabfall in den Verbindungsstücken und im Ventil ist vernachlässigbar klein) bestimmen und auf den gewünschten Wert regeln.

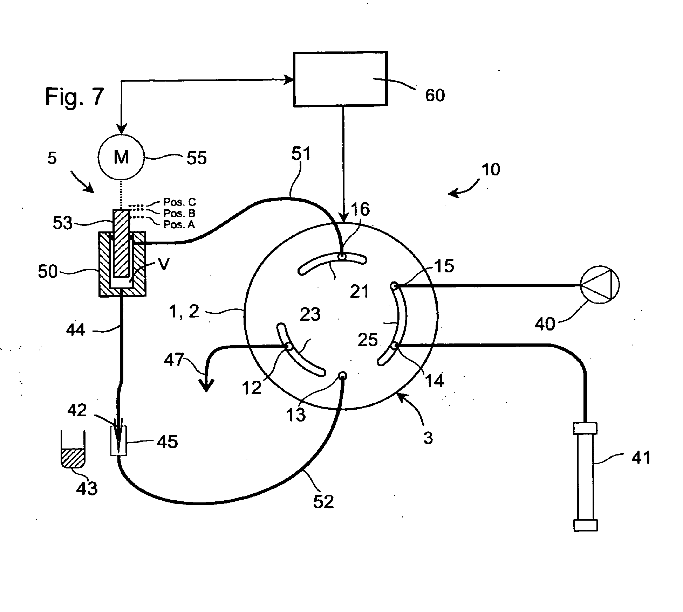

Nachdem das angesaugte Probenvolumen durch das von der Pumpe 40 geförderte Fluid vollständig aus dem Ansaugstück 44 zur Säule 41 gefördert wurde, kann das Ventil zur Dekompression der Probenschleife wieder in die DRUCKAUSGLEICH-Position geschaltet werden(Fig. 7).

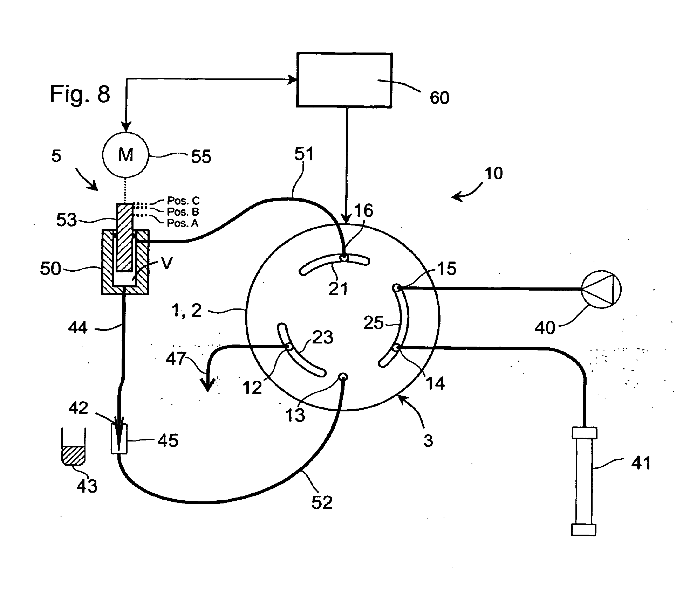

Ausgehend von dem in Fig. 7 dargestellten Zustand, wird der Kolben 53 in Position C bewegt. Hierdurch wird der Druck in der Probenschleife dem atmosphärischen Druck angeglichen. Dieser Zustand des HPLC-Systems ist in Fig. 8 gezeigt.Die Säule 41 ist während dieser Dekompressionszeit in der DRUCKAUSGLEICH-Position des Injektionsventils 3 bereits durch die verlängerte Nut 25 mit der Pumpe 40 verbunden, um Druckeinbrüche zu vermeiden. Die Bestimmung des Förderwegs des Kolbens 53 von der Position B zur Position C kann wie beim Komprimieren in Fig. 5 rechnerisch oder durch Messung und Regelung des Drucks erfolgen. Alternativ kann der Druck auch indirekt über eine Kraftmessung am Kolben 53 oder am Antrieb 55 des Kolbens bestimmt werden.

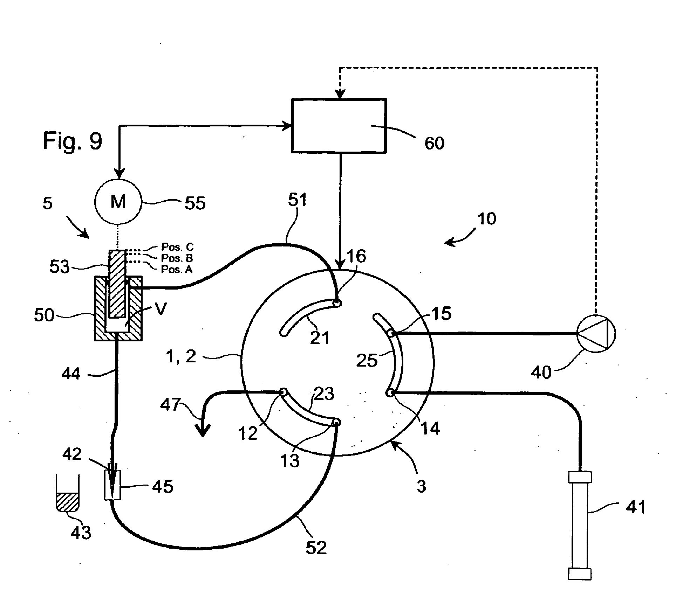

Nach erfolgter Dekompression der Probenschleife wird das Ventil 3 in die Stellung LOAD gesteuert (Fig. 9). Es kommt dabei zu keinen schädigenden Strömungen im Injektionsventil.

Der Kolben 53, der hochdruckfesten Probenfördereinrichtung 5 kann nun wieder in die Ausgangsposition A gefahren werden. Die überschüssige Fluidmenge wird durch den Wasteanschluss 47 entsorgt. Die drucklose Nadel.42 karin danach zur Aufnahme der nächsten Probe aus dem Nadelsitz des Injektionsports 45 zum entsprechenden Probenfläschchen bewegt werden.

Die Position C bei der Dekompression kann sich auch von der von der Ausgangsposition C vor der Kompression unterscheiden. Werden beispielsweise Gradienten (zeitlich gesteuertes Mischungsverhältnis des Laufmittels) durch die Säule gepumpt, kann diese Position C am Ende der Dekompression eine andere sein, da sich gegebenenfalls die Kompressibilität des Schleifeninhalts geändert hat.

Die Steuereinheit 60 kann vorgegebene Positionen A, B, C und/oder Wegdifferenzen zwischen diesen Positionen abhängig von Parametern des gesamten Probengebers speichern, insbesondere von der Kompressibilität des Laufmittels, Elaszitätseigenschaften der Probenschleife und der Probenfördereinrichtung etc. Diese Positionen können dann gesteuert (d.h. ohne eine Regelung) angefahren werden oder als Näherungswerte oder Ausganswerte für eine geregelte Bewegung dienen.

Zur Bestimmung der Positionen A, B, C bzw. der Bewegungswege für den Kolben kann ein Schaltvorgang des Injektionsventils 3 ohne Kompression bzw. Dekompression durchgeführt werden. Mittels eines Drucksensors kann dann der Druckeinbruch ermittelt und hieraus der erforderliche Weg bzw. die jeweilige Position B bzw. C bestimmt werden. Die so ermittelten Werte können dann gespeichert und für weitere Schaltvorgänge unter Verwendung einer Kompression bzw. Dekompression verwendet werden. Ein entsprechender Sensor kann auch in der Pumpe 40 vorgesehen sein. Denn derartige Pumpen für die HPLC weisen ohnehin immer einen Drucksensor für die Regelung des geförderten Laufmittels auf.Auch die Kompressibilität des Mediums, insbesondere des Laufmittels, kann mittels der Pumpe 40 ermittelt werden. Derartige Pumpen sind beispielsweise als Doppelkolbenpumpe ausgebildet, wobei mittels eines Drucksensors und einer Steuereinheit das Umschalten von einem Kolben auf den anderen Kolben in geeigneter Weise so gesteuert oder geregelt wird, dass sich eine hochkonstante Flussrate ergibt. Da auch bei diesem Umschaltprozess die Kompressibilität des Mediums berücksichtigt werden muss, kann aus der geigneten Ansteuerung der Doppelkolbenpumpe beim Umschalten von einem Kolben auf den anderen die Kompressibilität bestimmt und der Steuereinheit 60 als Information zugeführt werden. Diese Verbindung zwischen der Pumpe 40 und der Steuereinheit 60 ist nur in Fig. 9 gestrichelt dargestellt.

Bei dem dargestellten automatischen Probengeber ist somit gewährleistet, dass die ausreichend (hoch-) druckfeste Probenfördereinrichtung vor dem Zuschalten des Ansaugstücks in den Flussweg zur Chromatographiesäule, d.h. vor dem Schalten des Injektionsventils in die INJECT-Position, in einer besonderen Zwischenstellung des Injektionsventils, nämlich der DRUCKAUSGLEICH-Position, der Druck in der Probenschleife an den aktuellen Arbeitsdruck der Chromatographiesäule durch Kompression angeglichen wird.

Weiterhin wird vor dem Auftrennen der Probenschleife zum Ansaugen eines Probenvolumens aus einem Probenbehälter, d.h. vor dem Schalten des Injektionsventils in die LOAD-Position, in derselben Zwischenstellung des Injektionsventils, nämlich der DRUCKAUSGLEICH-Position, der Druck in der Probenschleife durch Aufnahme einer ganz bestimmten zusätzlichen Fluidmenge in der Probenfördereinrichtung dem Atmosphärendruck angeglichen (Dekompression).

Die Kompressions- und Dekompressionsströmungen fließen nicht über das Injektionsventil. Die Lebensdauer des (Hochdruck-) Injektionsventils des Probengebers ist somit nur durch den unvermeidlichen Abrieb zwischen Rotor und Stator sowie ggf. durch die abrasive Wirkung beispielsweise von Schmutzpartikein oder Probenmaterial begrenzt.

## Patentansprüche

1. Probengeber für die Flüssigkeitschromatographie, insbesondere die Hochleistungsflüssigkeitschromatographie,
(a) mit einem ansteuerbaren Injektionsventil (3), welches zumindest einen Waste-Port (12) für das Abführen von unter niedrigem Druck stehendem Fluid, zwei Probenschleifen-Ports (13, 16), sowie zwei Hochdruck-Ports (14, 15) für das Zuführen und Abführen von unter hohem Druck stehendem Fluid aufweist, wobei ein Hochdruckport (15) mit einer Pumpe (40) und der andere Hochdruckport (14) mit einer Chromatographiesäule (41) verbindbar ist,
(b) mit einer Probenschleife (44, 51, 52)
(i) die ein erstes Probenschleifen-Teilstück (51) umfasst, welches an einem Ende mit einem der Probenschleifen-Ports (16) und am anderen Ende mit einem Pumpenvolumen (V) einer Probenfördereinrichtung (5) verbunden ist,
(ii) die ein zweites Probenschleifen-Teilstück (44, 52) umfasst, weiches an einem Ende mit dem anderen der Probenschleifen-Ports (13) und am anderen Ende mit dem Pumpenvolumen (V) der Probenfördereinrichtung (5) verbunden ist,
(iii) wobei das zweite Probenschleifen-Teilstück (44, 52) in ein Ansaugstück (44) und ein Zuführstück (52) aufteilbar ausgebildet ist und
(iv) wobei im aufgeteilten Zustand mit dem freien Ende des mit dem Pumpenvolumen (V) verbundenen Ansaugstücks (44) ein Probenfluid ansaugbar ist, welches im verbundenen Zustand über das Zuführstück (52) in Richtung auf den betreffenden Probenschleifen-Port (13) zuführbar ist, und
(c) mit einer Steuereinheit (60) zur Ansteuerung des Injektionsventils (3) und der Probenfördereinrichtung (5),
(d) wobei das Injektionsventil (3) so ausgebildet ist,
(i) dass in einer LOAD-Position die beiden Hochdruckports (14, 15) miteinander sowie der mit dem zweite Probenschleifen-Teilstück (44, 52) verbundene Probenschleifen-Port (13) mit dem Waste-Port (12) verbunden sind und
(ii) dass in einer INJECT-Position der mit der Pumpe (40) verbundene Hochdruck-Port (15) mit dem mit dem ersten Probenschleifen-Teilstück (51) verbundene Probenschleifen-Port (16) verbunden ist und der mit der Chromatographiesäule (41) verbindbare Hochdruck-Port (14) mit dem mit dem zweiten Probenschleifen-Teilstück (52) verbundenen Probenschleifen-Port (13),
**dadurch gekennzeichnet,**
(e) **dass** das Injektionsventil eine DRUCKAUSGLEICH-Position aufweist, in welcher die Probenschleifen-Ports der geschlossenen Probenschleife (44, 52, 51) im Injektionsventil (3) dicht verschlossen sind,
(f) **dass** die Steuereinheit (60) so ausgebildet ist, dass sie das Injektionsventil und die Probenfördereinrichtung so ansteuert,
(i) **dass** nach dem Ansaugen des Probenfluids in der LOAD-Position das Injektionsventil (3) in die DRUCKAUSGLEICH-Position geschaltet wird, dass mittels der Probenfördereinrichtung (5) der Druck in der Probenschleife (44, 52, 51) bis im Wesentlichen auf den Arbeitsdruck der Pumpe (40) erhöht wird und dass erst anschließend in die INJECT-Position geschaltet wird, und/oder
(ii) **dass** nach dem Injizieren des Probenfluids in der INJECT-Position das Injektionsventil (3) in die DRUCKAUSGLEICH-Position geschaltet wird, dass mittels der Probenfördereinrichtung (5) der Druck in der Probenschleife (44, 52, 51) bis im Wesentlichen auf den Umgebungsdruck reduziert wird und dass erst anschließend in die LOAD-Position geschaltet wird.

2. Probengeber nach Anspruch 1, **dadurch gekennzeichnet, dass** in der DRUCKAUSGLEICH-Position die beiden Hochdruckports (14, 15) des Injektionsventils (3) verbunden sind.

3. Probengeber nach Anspruch 2, **dadurch gekennzeichnet, dass** das Injektionsventil (3) einen Rotor (2) und einen Stator (1) aufweist, wobei der Rotor (2) eine mit der Stirnfläche des Stators (1) zusammenwirkende Stirnfläche aufweist, in welcher zumindest drei Nuten (21, 23, 25) ausgebildet sind, die abhängig von der Drehposition des Rotors (2) gegenüber dem Stator (1) in der Stimfläche des Stators (1) vorgesehene Port-Öffnungsquerschnitte der Hochdruckports (14, 15), der Probenschleifen-Ports (13, 16) und des Wasteports (12) entweder nach Maßgabe des Anspruchs 1 druckdicht verbinden oder druckdicht sperren, und dass die Nut (25), welche in der LOAD-Position des Injektionsventils (3) die beiden Hochdruckports (14, 15) verbindet, so lang ausgebildet ist, dass sie die Hochdruckports (14, 15) auch nach einem Verdrehen von Stator (1) und Rotor (2) in die DRUCKAUSGLEICH-Position noch verbindet.

4. Probengeber nach einem der vorhergehenden Ansprüche, **dadurch gekennzeichnet, dass** die Probenfördereinrichtung (5) hochdruckfest ausgebildet ist und Drücke erzeugen kann, welche in der Hochleistungsflüssigkeitschromatographie Verwendung finden, vorzugsweise Drücke größer als 500 bis 600 bar, höchst vorzugsweise Drücke von größer als 1000 bar.

5. Probengeber nach einem der vorhergehenden Ansprüche, **dadurch gekennzeichnet, dass** die Probenfördereinrichtung (5) ein bewegbares Element (53) aufweist, welches abgedichtet in einem Pumpenvolumen (V) geführt ist und welches mittels eines von der Steuereinheit (60) ansteuerbaren Antriebs (55) der Probenfördereinrichtung (5) zur Förderung des im Pumpenvolumen (V) enthaltenen Fluids bewegbar ist.

6. Probengeber nach Anspruch 5, **dadurch gekennzeichnet, dass** die Steuereinheit das bewegbare Element (53) nach Erreichen der DRUCKAUSGLEICH-Position des Injektionsventils (3) durch eine entsprechende Ansteuerung des Antriebs (55) um einen vorbestimmten Weg bewegt, der ausreicht, um eine durch Elastizitäten der das Fluid führenden Einrichtungen und durch die Kompressibilität des Fluids notwendige Änderung des Pumpenvolumens (V) der Probenfördereinrichtung (5) derart zu erzeugen, dass nach einem Umschalten des Injektionsventils (3) von der INJECT-Position in die DRUCKAUSGLEICH-Position durch eine Vergrößerung des Pumpenvolumens (V) eine Druckreduzierung in der Probenschleife (44, 52, 51) im Wesentlichen auf den Umgebungsdruck erreicht wird und dass nach einem Umschalten des Injektionsventils (3) von der LOAD-Position in die DRUCKAUSGLEICH-Position durch eine Verringerung des Pumpenvolumens (V) eine Druckerhöhung in der Probenschleife (44, 52, 51) im Wesentlichen auf den Arbeitsdruck der Pumpe (40) erreicht wird.

7. Probengeber nach einem der vorhergehenden Ansprüche, **dadurch gekennzeichnet, dass** ein Drucksensor vorgesehen ist, welcher den Druck des Fluids in der geschlossenen Probenschleife (44, 52, 51) oder im Pumpenvolumen (V) der Probenfördereinrichtung (5) erfasst, zumindest während der Zeit, in welcher sich das Injektionsventil (3) in der DRUCKAUSGLEICH-Position befindet.

8. Probengeber nach einem der Ansprüche 1 bis 6, **dadurch gekennzeichnet, dass** eine Sensoreinrichtung zur Erfassung der Kraft, die der Antrieb (55) auf das bewegte Element (53) ausübt, vorgesehen ist, deren Signal der Steuereinheit zugeführt ist, wobei die Steuereinheit aus dem ihr zugeführten Signal den Druck des Fluids in der geschlossenen Probenschleife (44, 52, 51) oder im Pumpenvolumen (V) der Probenfördereinrichtung (5) erfasst, zumindest während der Zeit, in welcher sich das Injektionsventil (3) in der DRUCKAUSGLEICH-Position befindet.

9. Probengeber nach Anspruch 7, **dadurch gekennzeichnet, dass** das Signal des Drucksensors der Steuereinheit (60) zugeführt ist und dass die Steuereinheit (60) den Druck des Fluids mit einem Solldruckwert vergleicht und die Probenfördereinrichtung (5) so ansteuert, dass der Druck des Fluids vor dem Umschalten des Injektionsventils (3) von der DRUCKAUSGLEICH-Position in die INJECT-Position einen Hochdruck-Sollwert erreicht und/oder dass der Druck des Fluids vor dem Umschalten des Injektionsventils (3) von der DRUCKAUSGLEICH-Position in die LOAD-Position einen Niederdruck-Sollwert erreicht.

10. Probengeber nach einem der vorhergehenden Ansprüche, **dadurch gekennzeichnet, dass** die Pumpe (40) so ausgebildet ist, dass eine in der Pumpe (40) vorgesehene Pumpensteuereinheit unter Verwendung eines in der Pumpe (40) vorgesehenen Drucksensors aus den Bewegungen eines oder mehrerer von der Pumpensteuereinheit angesteuerten, bewegten Förderelemente für das zu fördernde Medium die Kompressionseigenschaften des zu fördernden Mediums bestimmt und diese Informationen der Steuereinheit (60) zuführt, und dass die Steuereinheit (60) diese Informationen zur Ansteuerung der Probenfördereinrichtung (5) während der Druckausgleichsvorgänge verwendet werden.

11. Probengeber nach einem der Ansprüche 1 bis 10, **dadurch gekennzeichnet, dass** die Steuereinheit (60) mittels des Drucksensors oder eine in der Pumpe (40) vorgesehene Steuereinheit mittels eines in der Pumpe (40) vorgesehenen Drucksensors einen verbleibenden Druckeinbruch nach dem Umschalten von der DRUCKAUSGLEICH-Position in die INJECT-Position erfasst und dass die Steuereinheit (60) die Bewegungswege des bewegbaren Elements (53) der Probenfördereinrichtung (5) bei künftigen Druckausgleichsvorgängen unter Berücksichtigung der dem Druckeinbruch entsprechenden erfassten Druckdifferenz steuert oder regelt.

## Claims

1. Sample dispenser for liquid chromatography, in particular high-performance liquid chromatography,
(a) comprising an actuatable injection valve (3) that has at least one waste port (12) for discharging fluid under low pressure, two sample loop ports (13, 16) and two high-pressure ports (14, 15) for supplying and discharging fluid under high pressure, it being possible to connect one high-pressure port (15) to a pump (40) and the other high-pressure port (14) to a chromatography column (41),
(b) comprising a sample loop (44, 51, 52)
(i) that includes a first sample loop portion (51) that is connected at one end to one of the sample loop ports (16) and at the other end to a pump volume (V) of a sample-conveying device (5),
(ii) that includes a second sample loop portion (44, 52) that is connected at one end to the other sample loop port (13) and at the other end to the pump volume (V) of the sample-conveying device (5),
(iii) the second sample loop portion (44, 52) being formed such that it can be separated into an intake part (44) and a feed part (52), and
(iv) it being possible in the separated state for a sample fluid to be taken in by the free end of the intake part (44) that is connected to the pump volume (V) and supplied in the connected state towards the relevant sample loop port (13) via the feed part (52), and
(c) comprising a control unit (60) for actuating the injection valve (3) and the sample-conveying device (5),
(d) the injection valve (3) being formed in such a way
(i) that, in a LOAD position, the two high-pressure ports (14, 15) are interconnected and the sample loop port (13) connected to the second sample loop portion (44, 52) is connected to the waste port (12), and
(ii) that, in an INJECT position, the high-pressure port (15) connected to the pump (40) is connected to the sample loop port (16) connected to the first sample loop portion (51), and the high-pressure port (14) that can be connected to the chromatography column (41) is connected to the sample loop port (13) connected to the second sample loop portion (52),
**characterised in that**
(e) the injection valve has a PRESSURE COMPENSATION position, in which the sample loop ports of the closed sample loop (44, 52, 51) in the injection valve (3) are tightly sealed, and
(f) **in that** the control unit (60) is formed so as to actuate the injection valve and the sample-conveying device in such a way
(i) that the injection valve (3) is switched into the PRESSURE COMPENSATION position after taking in the sample fluid in the LOAD position, that the pressure in the sample loop (44, 52, 51) is increased to essentially the operating pressure of the pump (40) by means of the sample-conveying device (5), and that only then is said injection valve switched into the INJECT position, and/or
(ii) that the injection valve (3) is switched into the PRESSURE COMPENSATION position after injecting the sample fluid in the INJECT position, that the pressure in the sample loop (44, 52, 51) is reduced to essentially the ambient pressure by means of the sample-conveying device (5), and that only then is said injection valve changed over into the LOAD position.

2. Sample dispenser according to claim 1, **characterised in that**, in the PRESSURE COMPENSATION position, the two high-pressure ports (14, 15) of the injection valve (3) are connected.

3. Sample dispenser according to claim 2, **characterised in that** the injection valve (3) has a rotor (2) and a stator (1), the rotor (2) having an end face that cooperates with the end face of the stator (1) and that has at least three grooves (21, 23, 25) formed therein that either, depending on the rotational position of the rotor (2) relative to the stator (1), connect or shut port opening cross-sections of the high-pressure ports (14, 15), of the sample loop ports (13, 16) and of the waste port (12) provided in the end face of the stator (1) in a pressure-tight manner according to claim 1, and **in that** the groove (25) that connects the two high-pressure ports (14, 15) in the LOAD position of the injection valve (3) is formed to such a length as to still connect the high-pressure ports (14, 15) after the stator (1) and the rotor (2) are turned into the PRESSURE COMPENSATION position.

4. Sample dispenser according to any of the preceding claims, **characterised in that** the sample-conveying device (5) is formed in a high-pressure-resistant manner and can generate the pressures used in high-performance liquid chromatography, preferably pressures greater than 500 to 600 bar, particularly preferably pressures greater than 1000 bar.

5. Sample dispenser according to any of the preceding claims, **characterised in that** the sample-conveying device (5) has a movable element (53) that is guided in a pump volume (V) in a sealed manner and can be moved by means of a drive (55), actuated by the control unit (60), of the sample-conveying device (5) so as to convey the fluid contained in the pump volume (V).

6. Sample dispenser according to claim 5, **characterised in that** the control unit moves the movable element (53) by a predetermined distance after the PRESSURE COMPENSATION position of the injection valve (3) is reached by means of a corresponding actuation of the drive (55), said predetermined distance being sufficient to bring about a change in the pump volume (V) of the sample-conveying device (5), which change is required due to the elasticities of the devices conveying the fluid and to the compressibility of the fluid, in such a way that, after switching the injector valve (3) from the INJECT position into the PRESSURE COMPENSATION position, a pressure reduction in the sample loop (44, 52, 51) to essentially the ambient pressure is achieved by increasing the pump volume (V), and **in that**, after switching the injector valve (3) from the LOAD position into the PRESSURE COMPENSATION position, a pressure increase in the sample loop (44, 52, 51) to essentially the operating pressure of the pump (40) is achieved by decreasing the pump volume (V).

7. Sample dispenser according to any of the preceding claims, **characterised in that** a pressure sensor is provided that detects the pressure of the fluid in the closed sample loop (44, 52, 51) or in the pump volume (V) of the sample-conveying device (5) at least while the injection valve (3) is in the PRESSURE COMPENSATION position.

8. Sample dispenser according to any of claims 1 to 6, **characterised in that** a sensor device is provided for detecting the force exerted upon the element in motion (53) by the drive (55), the signal of said sensor device being supplied to the control unit, the control unit detecting the pressure of the fluid in the closed sample loop (44, 52, 51) or in the pump volume (V) of the sample-conveying device (5) from the signal supplied to it, at least while the injection valve (3) is in the PRESSURE COMPENSATION position.

9. Sample dispenser according to claim 7, **characterised in that** the signal of the pressure sensor is supplied to the control unit (60), and **in that** the control unit (60) compares the pressure of the fluid with a nominal pressure value and actuates the sample-conveying device (5) in such a way that the pressure of the fluid reaches a nominal high-pressure value before the injection valve (3) is switched from the PRESSURE COMPENSATION position into the INJECT position, and/or **in that** the pressure of the fluid reaches a nominal low-pressure value before the injection valve (3) is switched from the PRESSURE COMPENSATION position into the LOAD position.

10. Sample dispenser according to any of the preceding claims, **characterised in that** the pump (40) is formed in such a way that a pump control unit provided in the pump (40) determines, by means of a pressure sensor provided in the pump (40), the compression properties of the medium to be conveyed from the movements of one or more conveying elements actuated and moved by the pump control unit, and **in that** the control unit (6) uses this information to actuate the sample-conveying device (5) during the pressure compensation operations.

11. Sample dispenser according to any of claims 1 to 10, **characterised in that** the control unit (60) or a control unit provided in the pump (40) detects, by means of the pressure sensor or a pressure sensor provided in the pump (40) respectively, a remaining pressure drop after switching from the PRESSURE COMPENSATION position into the INJECT position, and **in that** the control unit (60) controls or regulates the movement paths of the movable element (53) of the sample-conveying device (5) in future pressure compensation operations, taking into consideration the detected pressure differential that corresponds to the pressure drop.

## Revendications

1. Echantillonneur pour la chromatographie en phase liquide, en particulier pour la chromatographie en phase liquide haute performance,
(a) avec une vanne d'injection (3) commandable, qui présente au moins un orifice pour déchets (12) destiné à évacuer un fluide sous basse pression, deux orifices pour boucle d'échantillonnage (13, 16), ainsi que deux orifices haute pression (14, 15) pour amener et évacuer un fluide sous haute pression, dans lequel un orifice haute pression (15) peut être raccordé à une pompe (40) et l'autre orifice haute pression (14) peut être raccordé à une colonne de chromatographie (41),
(b) avec une boucle d'échantillonnage (44, 51, 52)
(i) qui comprend un premier tronçon de boucle d'échantillonnage (51), qui est raccordé au niveau d'une extrémité à l'un des orifices pour boucle d'échantillonnage (16) et au niveau de l'autre extrémité à un volume de pompe (V) d'un transporteur d'échantillon (5),
(ii) qui comprend un deuxième tronçon de boucle d'échantillonnage (44, 52), qui est raccordé au niveau d'une extrémité à l'autre orifice pour boucle d'échantillonnage (13) et au niveau de l'autre extrémité au volume de pompe (V) du transporteur d'échantillon (5),
(iii) dans lequel le deuxième tronçon de boucle d'échantillonnage (44, 52) est ainsi configuré qu'il peut être subdivisée en un segment d'aspiration (44) et un segment d'alimentation (52), et
(iv) dans laquelle, à l'état subdivisé, un fluide d'échantillon peut être aspiré par l'extrémité libre du segment d'aspiration (44) raccordé au volume de pompe (V), fluide qui, à l'état de raccord, peut être amené via le segment d'alimentation (52) dans la direction de l'orifice de boucle d'échantillonnage (13) considéré, et
(c) avec une unité de commande (60) pour commander la vanne d'injection (3) et le transporteur d'échantillon (5)
(d) la vanne d'injection (3) étant configurée de telle sorte
(i) que dans une position CHARGE, les deux orifices haute pression (14, 15) soient raccordés l'un à l'autre, et que l'orifice pour boucle d'échantillonnage (13), raccordé au deuxième tronçon de boucle d'échantillonnage (44, 52), soit raccordé à l'orifice pour déchets (12), et
(ii) que, dans une position INJECTION, l'orifice haute pression (15), raccordé à la pompe (40), soit raccordé à l'orifice pour boucle d'échantillonnage (16), lequel est raccordé au premier tronçon de boucle d'échantillonnage (51), et que l'orifice haute pression (14) pouvant être raccordé à la colonne de chromatographie (41) soit raccordé à l'orifice pour boucle d'échantillonnage (13), lequel est raccordé au deuxième tronçon de boucle d'échantillonnage (52),
**caractérisé**
(e) **en ce que** la vanne d'injection présente une position COMPENSATION DE PRESSION dans laquelle les orifices pour boucle d'échantillonnage de la boucle d'échantillonnage (44, 52, 51) fermée sont obturés de manière étanche dans la vanne d'injection (3),
(f) **en ce que** l'unité de commande (60) est ainsi configurée qu'elle commande la vanne d'injection et le transporteur d'échantillon de telle sorte
(i) que, après aspiration du fluide d'échantillon dans la position CHARGE, la vanne d'injection (3) soit passée en position COMPENSATION DE PRESSION; que, à l'aide du transporteur d'échantillon (5), la pression dans la boucle d'échantillonnage (44, 52, 51) soit augmentée essentiellement jusqu'à la pression de fonctionnement de la pompe (40) ; et que ce ne soit qu'ensuite qu'il soit passé en position INJECTION, et/ou
(ii) que, après injection du fluide d'échantillon dans la position INJECTION, la vanne d'injection (3) soit passée en position COMPENSATION DE PRESSION; que, à l'aide du transporteur d'échantillon (5), la pression dans la boucle d'échantillonnage (44, 52, 51) soit réduite essentiellement jusqu'à la pression ambiante ; et que ce ne soit qu'ensuite qu'il soit passé en position CHARGE.

2. Echantillonneur selon la revendication 1, **caractérisé en ce que**, dans la position COMPENSATION DE PRESSION, les deux orifices haute pression (14, 15) de la vanne d'injection (3) sont raccordés.

3. Echantillonneur selon la revendication 2, **caractérisé en ce que** la vanne d'injection (3) présente un rotor (2) et un stator (1), dans lequel le rotor (2) présente une face qui coopère avec la face du stator (1), face du rotor dans laquelle sont formées au moins trois rainures (21, 23, 25), qui, en fonction de la position rotative du rotor (2) par rapport au stator (1), selon les indications de la revendication 1 soit raccordent de manière étanche soit obstruent de manière étanche les sections transversales des ouvertures d'orifice, prévues dans la face du stator (1), des orifices haute pression (14, 15) des orifices pour boucle d'échantillonnage (13, 16) et de l'orifice pour déchets (12), et **en ce que** la rainure (25), qui en position CHARGE de la vanne d'injection (3) raccorde les deux orifices haute pression (14, 15), est configurée suffisamment longue pour raccorder encore les orifices haute pression (14, 15), même après un renversement du stator (1) et du rotor (2) dans la position COMPENSATION DE PRESSION.

4. Echantillonneur selon l'une des revendications précédentes, **caractérisé en ce que** le transporteur d'échantillon (5) est configuré de façon à résister aux hautes pressions, et peut produire des pressions qui trouvent une utilisation en chromatographie en phase liquide haute performance, de préférence des pressions supérieures à 500 à 600 bars, et encore plus de préférence des pressions supérieures à 1 000 bars.

5. Echantillonneur selon l'une des revendications précédentes, **caractérisé en ce que** le transporteur d'échantillon (5) présente un élément mobile (53) qui est mené d'une manière étanche dans un volume de pompe (V) et qui, à l'aide d'un mécanisme d'entraînement (55) pouvant être commandé par l'unité de commande (60) et appartenant au transporteur d'échantillon (5), est mobile pour transporter le fluide contenu dans le volume de pompe (V).

6. Echantillonneur selon la revendication 5, **caractérisé en ce que**, lorsqu'a été atteinte la position COMPENSATION DE PRESSION de la vanne d'injection (3), l'unité de commande déplace l'élément mobile (53) d'une course prédéterminée, via une commande correspondante du mécanisme d'entraînement (55), laquelle course suffit pour produire la nécessaire modification du volume de pompe (V) du transporteur d'échantillon (5) via les élasticités des dispositifs conduisant le fluide et via la compressibilité du fluide, modification telle que, après le passage de la vanne d'injection (3) de la position INJECTION à la position COMPENSATION DE PRESSION, on atteigne, via une augmentation du volume de pompe (V), une réduction de la pression dans la boucle d'échantillonnage (44, 52, 51), essentiellement jusqu'à la pression ambiante, et telle que, après le passage de la vanne d'injection (3) de la position CHARGE à la position COMPENSATION DE PRESSION, on atteigne, via une diminution du volume de pompe (V), une augmentation de la pression dans la boucle d'échantillonnage (44, 52, 51), essentiellement jusqu'à la pression de fonctionnement de la pompe (40).

7. Echantillonneur selon l'une des revendications précédentes, **caractérisé en ce qu'**un capteur de pression est prévu, qui enregistre la pression du fluide dans la boucle d'échantillonnage fermée (44, 52, 51) ou dans le volume de pompe (V) du transporteur d'échantillon (5), au moins pendant le laps de temps au cours duquel la vanne d'injection (3) se trouve en position COMPENSATION DE PRESSION.

8. Echantillonneur selon l'une des revendications 1 à 6, **caractérisé en ce qu'**un dispositif capteur est prévu pour enregistrer la force que le mécanisme d'entraînement (55) exerce sur l'élément mobile (53), dont le signal est amené à l'unité de commande, dans lequel l'unité de commande enregistre, à partir du signal qui lui est amené, la pression du fluide dans la boucle d'échantillonnage fermée (44, 52, 51) ou dans le volume de pompe (V) du transporteur d'échantillon (5), au moins pendant le laps de temps au cours duquel la vanne d'injection (3) se trouve en position COMPENSATION DE PRESSION.

9. Echantillonneur selon la revendication 7, **caractérisé en ce que** le signal du capteur de pression est amené à l'unité de commande (60), et **en ce que** l'unité de commande (60) compare la pression du fluide à une valeur de consigne de la pression, et commande le transporteur d'échantillon (5) de telle sorte que la pression du fluide, avant le passage de la vanne d'injection (3) de la position COMPENSATION DE PRESSION à la position INJECTION, atteigne une valeur de consigne de la haute pression, et/ou que la pression du fluide, avant le passage de la vanne d'injection (3) de la position COMPENSATION DE PRESSION à la position CHARGE, atteigne une valeur de consigne de la basse pression.

10. Echantillonneur selon l'une des revendications précédentes, **caractérisé en ce que** la pompe (40) est configurée de telle sorte qu'une unité de commande de pompe, prévue dans la pompe (40), détermine les propriétés de compression du milieu à transporter, en utilisant un capteur de pression prévu dans la pompe (40) et à partir des déplacements d'un ou plusieurs élément(s) de transport déplacé(s) et commandé(s) par l'unité de commande de pompe pour le milieu à transporter, et amène ces informations à l'unité de commande (60), et de telle sorte que l'unité de commande (60) utilise ces informations pour commander le transporteur d'échantillon (5) pendant les processus de compensation de pression.

11. Echantillonneur selon l'une des revendications 1 à 10, **caractérisé en ce que** l'unité de commande (60) à l'aide du capteur de pression, ou une unité de commande prévue dans la pompe (40) à l'aide d'un capteur de pression prévu dans la pompe (40), enregistre une chute de pression résiduelle après le passage de la position COMPENSATION DE PRESSION à la position INJECTION, et **en ce que** l'unité de commande (60) pilote ou régule les courses de déplacement de l'élément mobile (53) du transporteur d'échantillon (5) lors de processus ultérieurs de compensation de pression, en prenant en considération la différence de pression enregistrée correspondant à la chute de pression.
